# EUROPEAN PATENT SPECIFICATION

(11) **EP 2 787 202 B1**
(45) Date of publication and mention of the grant of the patent: **29.05.2024**
(21) Application number: 14162033.6
(22) Date of filing: 27.03.2014
(51) Int. Cl.: F02D 41/00, F02N 11/08, B60W 30/18, F16H 59/18

(54) **Engine control unit**
Motorsteuerungseinheit
Boîtier de commande du moteur

(30) Priority: 29.03.2013 JP 2013071745
(43) Date of publication of application: 08.10.2014
(73) Proprietor: Mitsubishi Jidosha Kogyo Kabushiki Kaisha, Tokyo 108-8410 (JP)
(72) Inventor: Funakoshi, Hiroshi, Tokyo, Tokyo 108-8410 (JP)
(74) Representative: Vossius & Partner Patentanwälte Rechtsanwälte mbB

(56) References cited:
- EP-A1- 1 781 936
- WO-A1-2011/162374
- DE-A1-102011 085 395
- US-A1- 2012 172 175

## Description

### FIELD

The present invention relates to an engine control unit that controls an engine of a vehicle.

### BACKGROUND

Idling stop control has been developed for the control of the engines of vehicles. Idling stop control automatically stops the engine during idling if idling stop conditions are established and then automatically restarts the engine if restart conditions are established.

The idling stop conditions, for example, include the stop of the vehicle as a result of the braking operation by the driver, while the restart conditions, for example, include the release of the brake by the driver during a stationary-state of the vehicle.

The idling stop and restart conditions may cause frequent stops and restarts of the engine if the vehicle frequently switches between a stationary-state and a moving state, such as during a traffic jam or parking operation. This may impair drivability.

US 2012/172175 A1 relates to methods and systems for reducing audible clunks and objectionable drive feel in vehicles including start/stop systems. In one example, a vehicle engine is shutdown during vehicle coasting. The vehicle engine is then restarted, while the vehicle is moving with a torque converter clutch disengaged. A transmission clutch pressure is then adjusted during the restart based on a torque converter output speed relative to a torque converter input speed.

WO 2011/162374 A1 discloses a vehicle control device with a control unit performing a stopping control and a restarting control. A coasting acceleration rate acquiring unit acquires the estimated acceleration rate of a vehicle as the coasting acceleration rate when the vehicle is travelling in a state in which the wheels are not applied with braking force. A coasting vehicle speed estimating unit acquires, on the basis of the coasting acceleration rate, the vehicle speed at the point in which the restarting time period needed for restarting the engine had elapsed as the first vehicle speed estimation value when the engine stopped as a result of the stopping control. The control unit performs the restarting control when the first vehicle speed estimation value is less than a brake control allowable reference value set for determining whether or not to execute the braking control.

A technique has been developed to avoid frequent stops and restarts of the engine, as is disclosed in, for example, JP 2012-067716 A. An engine restarted according to the establishment of the restart conditions through this technique is prohibited from automatic stop until the vehicle reaches a predetermined speed. In this way, the automatic stop and restart of the engine are prevented even when the vehicle frequently switches between a stationary-state and a moving state below the predetermined speed.

Another technique has been developed to increase the frequency of automatic stops of the engine, as is disclosed in, for example, JP 2011-196288 A. With this technique, if the brake is applied and the speed of the vehicle falls below a predetermined value, the engine of the coasting vehicle is automatically stopped even before the vehicle comes to a complete standstill. In this way, the engine can be automatically stopped more frequently to improve the fuel efficiency.

The techniques in JP 2012-067716 A and JP 2011-196288 A may be combined to decrease the frequency of the stop-restart cycles of the engine and to increase the frequency of automatic stops of the engine. To combine such techniques (hereinafter referred to as "combined technique"), the engine may be automatically stopped while the vehicle is still coasting immediately before it comes to a complete standstill, instead of stopping the vehicle upon standstill. Specifically, the automatic stop of the engine may be prohibited until speed of the vehicle reaches a predetermined value (which hereinafter is referred to as "engine-stop permission speed"). Once the speed of the vehicle exceeds the engine-stop permission speed, the engine may be automatically stopped while the vehicle is coasting at a speed below that immediately before the vehicle comes to a complete standstill (which hereinafter is referred to as "engine-stop speed"). In such a case, the engine-stop speed is lower than the engine-stop permission speed. The patent application EP 1 781 936 A1 discloses all the preamble of the independent claim 1.

A high engine-stop speed increases the frequency of the automatic stops of the engine. Such a high engine-stop speed, however, approximates the engine-stop permission speed. Thus, the frequency of the stop-restart cycles of the engine increases if the vehicle is running at variable speeds approximating the engine-stop speed and the engine-stop permission speed, such as in a traffic jam.

Furthermore, running includes coasting or cruising described below.

To avoid this, the engine-stop permission speed may be increased. A vehicle having a high engine-stop permission speed will have satisfactory drivability because the stop and restart of the engine are prevented at speeds below the engine-stop permission speed but the automatic stops of the engine will be less frequent. In other words, the combined technique has a trade-off relationship between the decreased frequency of the stop-restart cycles of the engine and the increased frequency of automatic stops of the engine.

### SUMMARY

The invention for which protection is sought is defined in the independent claim. Any disclosure that does not fall within the scope of the claim is presented herein for illustrative purpose.

### TECHNICAL PROBLEMS

An object of the present invention, which has been conceived in light of the issues described above, is to provide an engine control unit that maintains the drivability and improves the fuel efficiency.

In addition to the object described above, any other object of the present invention may be the achievement of advantages through the configuration of the embodiments of the present invention described below, which cannot be achieved by any known art.

### SOLUTION TO PROBLEMS

To achieve the objects described above, an engine control unit according to claim 1 is provided.

### ADVANTAGEOUS EFFECTS

In the engine control unit according to the present invention, the engine automatically stops by stopping the idling during a stationary-state of the vehicle upon the establishment of a stationary-state idling stop condition including the stop of a vehicle after a speed of the vehicle exceeds a first speed. Thus, the engine does not automatically stop at a speed lower than the first speed during a traffic jam or parking operation, for example, involving repeated stop and run operations. In this way, frequent automatic stops of the engine during a stationary-state of the vehicle are prevented to maintain the drivability.

If a coasting-state idling stop condition including the speed of the vehicle exceeds a second speed and then falls below a third speed is established, the engine automatically stops during a coasting state (running state) to improve the fuel efficiency. The engine does not automatically stop during a coasting state under variable speeds that do not exceed the second speed but repeatedly fall below the third speed during a traffic jam, for example. Thus, frequent automatic stops of the engine during a coasting state are prevented to maintain the drivability.

The second speed, which is higher than the first speed, can prevent frequent automatic stops of the engine during a coasting state to maintain the drivability and maintain the frequency of automatic stops of the engine during a stationary-state of the vehicle to improve the fuel efficiency.

### BRIEF DESCRIPTION OF DRAWINGS

The nature of this invention, as well as other objects and advantages thereof, will be explained in the following with reference to the accompanying drawings, in which like reference characters designate the same or similar parts throughout the figures and wherein:

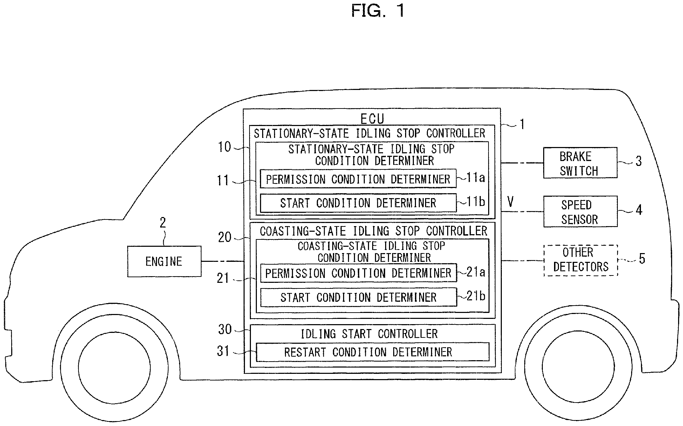

Fig. 1 is a schematic view of the entire engine control unit according to an embodiment of the present invention.

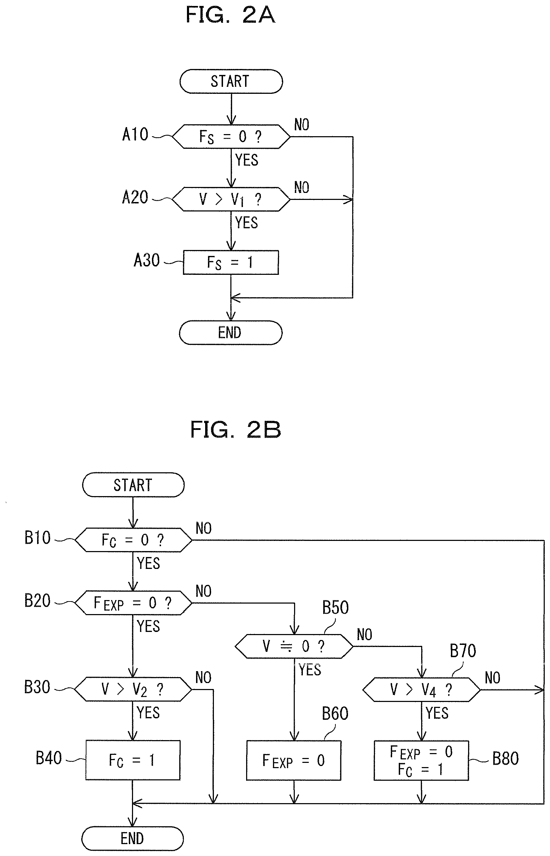

Figs. 2A and 2B are flow charts illustrating a determination process for the permission of the idling stop under the idling stop condition carried out by the engine control unit according to an embodiment of the present invention. Fig. 2A illustrates the determination process for the permission of the idling stop operation during a stationary-state of the vehicle. Fig. 2B illustrates the determination process for the permission of the idling stop during a coasting state of the vehicle.

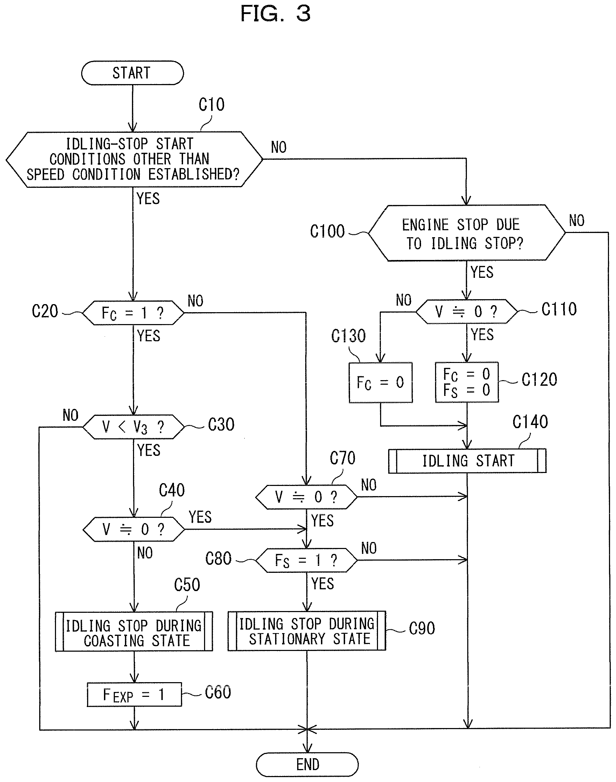

Fig. 3 is a flow chart illustrating the determination process for the start of the idling stop operation under the idling stop condition carried out by the engine control unit according to an embodiment of the present invention.

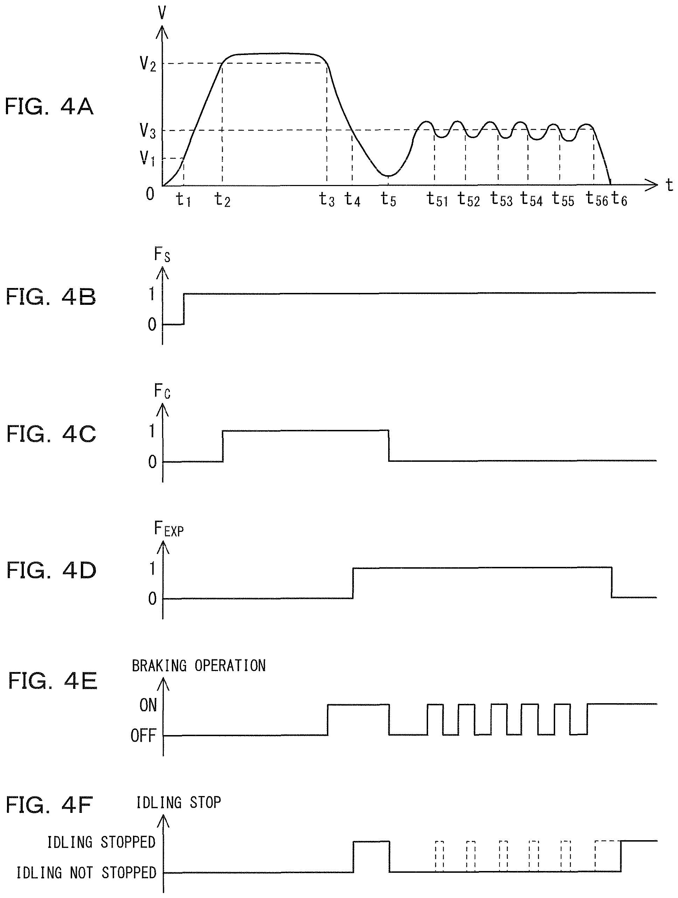

Figs. 4A to 4F are time charts illustrating exemplary parameters for the idling stops carried out by the engine control unit according to an embodiment of the present invention.. Fig. 4A illustrates a speed V of the vehicle. Fig. 4B illustrates a flag F_{S} that indicates the establishment of a condition for the permission of an idling stop during a stationary-state of the vehicle. Fig. 4C illustrates a flag F_{C} that indicates the establishment of a condition for the permission of an idling stop during a coasting state of the vehicle. Fig. 4D illustrates a flag F_{EXP} indicating the history of idling stops during a coasting state of the vehicle. Fig. 4E illustrates the braking operation by the driver. Fig. 4F illustrates the idling stops.

### DESCRIPTION OF EMBODIMENTS

Embodiments of the present invention will now be described with reference to the accompanying drawings. An engine control unit according to the embodiments is mounted in a vehicle. The vehicle may be an ordinary automobile, such as a light motor vehicle or a regular motor vehicle, a medium-sized vehicle or a large-sized vehicle, such as a truck or a bus.

### [1. Embodiment]

### [1-1. Configuration]

### [1-1-1. Configuration of Input/output Devices of Control Unit]

The overall configuration of a vehicle according to an embodiment will now be described with reference to Fig. 1. The vehicle includes an engine control unit (hereinafter referred to as "ECU") 1, several detectors 3 to 5 connected to the input of the ECU 1, and an engine 2 connected to the output of the ECU 1. The ECU 1 is an electronic control unit in the form of a large scale integration (LSI) device or embedded electronic device, which includes a microprocessor, a read only memory (ROM) and a random access memory (RAM).

The detectors 3 to 5 connected to the input of the ECU 1 detect different types of information items required for the idling stop control carried out by the ECU 1.

In this embodiment, the idling stop control carried out by the ECU 1 requires at least information on the braking operation by the driver and information on the speed of the vehicle. To receive these information items, the input of the ECU 1 is connected to a brake switch 3 that detects the braking operation (operation of the service brakes) by the driver and a speed sensor 4 that detects the speed V of the vehicle. The information on the braking operation detected by the brake switch 3 and the information on the speed V detected by the speed sensor 4 are sent to the ECU 1.

The brake switch 3 may be any detector, such as a brake-fluid pressure sensor, that can detect the braking operation by the driver. A brake-fluid pressure sensor detects the pressure of the brake fluid and sends this to the ECU 1.

Detectors 5 (indicated by the dotted lines) are connected to the input of the ECU 1 and detect other types of information items required for the idling stop control by the ECU 1 (for example, information on the operation of the accelerator by the driver, information on the steering and the steering torque, and information on the charge of the battery).

Idling stop control of the engine (internal combustion engine) 2 connected to the output of the ECU 1 is carried out by the ECU 1.

### [1-1-2. Configuration of Control Unit]

The ECU 1 controls a wide range of systems associated with the engine 2. The ECU 1 will, however, be described below by focusing on features associated with the idling stop control or automatic stop of the engine 2 and automatic restart of the engine 2.

The ECU 1 includes the following functional components: a stationary-state idling stop controller 10 that stops the idling of the vehicle during a stationary-state; a coasting-state idling stop controller 20 that stops the idling of the vehicle during a coasting state (running state) ; and an idling start controller 30 that starts the idling during a stationary or coasting state of the vehicle.

The stationary-state idling stop controller 10 stops the idling if the idling stop conditions for a stationary-state are established during the operation of the engine 2. The coasting-state idling stop controller 20 stops the idling if the idling stop conditions for a coasting state are established during the operation of the engine 2. The idling start controller 30 starts the idling (restarts the engine) if the restart conditions are established during the automatic stop of the engine 2 by the idling stop controllers 10 and 20.

The stationary-state idling stop controller 10, the coasting-state idling stop controller 20, and the idling start controller 30 will now be described in this order.

### [1-1-2-1. Configuration for Idling Stop Control during Stationary-state of Vehicle]

The stationary-state idling stop controller 10 includes a stationary-state idling stop condition determiner 11 that determines the idling stop condition for a stationary-state, as a functional component. If the stationary-state idling stop condition determiner 11 determines the establishment of the idling stop condition for a stationary-state, the stationary-state idling stop controller 10 stops the idling during a stationary-state of the vehicle. In contrast, if the stationary-state idling stop condition determiner 11 determines the collapse of the establishment of the idling stop condition for a stationary-state, the stationary-state idling stop controller 10 does not stop the idling during a stationary-state of the vehicle.

The stationary-state idling stop condition determiner 11 includes a permission condition determiner 11a and a start condition determiner 11b. The permission condition determiner 11a determines the establishment of the condition for permitting the idling stop during a stationary-state of the vehicle (hereinafter referred to as "stationary-state idling stop permission condition"). The start condition determiner 11b determines the establishment of the condition for starting an idling stop during a stationary-state of the vehicle (hereinafter referred to as "stationary-state idling stop start condition"). If the stationary-state idling stop permission condition and the stationary-state idling stop start condition are both established, the stationary-state idling stop condition determiner 11 determines the establishment of the stationary-state idling stop condition. The stationary-state idling stop permission condition is a precondition for the stationary-state idling stop condition. The permission condition determiner 11a determines the establishment of the stationary-state idling stop permission condition, and the start condition determiner 11b determines the establishment of the stationary-state idling stop start condition.

The "stationary-state idling stop permission condition" indicates "a speed V exceeding a first speed V₁ where the speed V is detected by the speed sensor 4". The permission condition determiner 11a determines that the speed V detected by the speed sensor 4 exceeds the first speed V₁ to determine the establishment of the stationary-state idling stop permission condition. Specifically, the stationary-state idling stop permission condition continues to be established if the speed V exceeds the first speed V₁. In other words, if the vehicle runs at a speed V exceeding the first speed V₁, the stationary-state idling stop permission condition is established, whereas if the vehicle only enters a stationary-state or runs at a speed V equal to or less than the first speed V₁ (or within a speed range), the stationary-state idling stop permission condition is not established.

The first speed V₁ is the upper limit set in advance on the basis of experiments or experiences for running at extremely low speeds, such as 5 km/h, during a traffic jam or parking operation, for example, involving repeated stop and run operations.

Upon the idling start by the idling start controller 30 during a stationary-state of the vehicle, the permission condition determiner 11a resets the determination of the stationary-state idling stop permission condition. Specifically, the stationary-state idling stop permission condition is not established until the speed V exceeds the first speed V₁ after the idling start during a stationary-state of the vehicle, whereas the stationary-state idling stop permission condition is established after the speed V exceeds the first speed V₁ and until the idling start in a stationary-state of the vehicle.

The idling start controller 30 starts the idling during a coasting state of the vehicle regardless of the determination of the stationary-state idling stop permission condition by the permission condition determiner 11a. Thus, the permission condition determiner 11a determines the stationary-state idling stop permission condition as described above regardless of the idling start in a coasting state of the vehicle.

The "stationary-state idling stop start condition" indicates "the establishment of preconditions not interfering with the idling stop; the detection of the driver's intention to stop the vehicle; and the stop of the vehicle".

The "preconditions", for example, include the completion of the warm-up operation of the engine 2; the inactivation or the absence of an activation request of devices driven by the engine 2 (for example, the inactivation of an air-conditioner including a compressor driven by the engine 2, the inactivation of devices in the vehicle that are powered by a generator driven by the engine 2, or a master back negative pressure or higher of the brake that receives an intake negative pressure from the engine 2); the activation of a catalyst for exhaust gas purification; or the normal operation of sensors associated with the operation of the engine 2.

The "detection of the driver's intention to stop the vehicle" is equivalent to "the detection of the operation of the service brake" with the prerequisite of the inactivation of the accelerator (i.e., the engine in an idling state).

The "stop of the vehicle" is determined through the detection of a speed V by the speed sensor 4. Specifically, a vehicle stop is determined if the speed V detected by the speed sensor 4 is 0 km/h or substantially 0 km/h, which is lower than a speed set for the determination of the stop of the vehicle. The "stop of the vehicle" mentioned below is also determined through the same procedure.

The start condition determiner 11b determines the establishment of the stationary-state idling stop start condition upon a vehicle stop as a result of the braking operation by the driver while the preconditions are established. In other words, if the braking operation by the driver is detected by the brake switch 3 while the preconditions are established, the start condition determiner 11b determines the stop of the vehicle on the basis of the speed V detected by the speed sensor 4. Thus, the stationary-state idling stop start condition is not established until the vehicle stops but is established upon the vehicle stop.

### [1-1-2-2. Configuration for Coasting-state Idling Stop Control]

The coasting-state idling stop controller 20 includes a coasting-state idling stop condition determiner 21 that determines the establishment of the coasting-state idling stop condition, as a functional component. If the coasting-state idling stop condition determiner 21 determines the establishment of the coasting-state idling stop condition, the coasting-state idling stop controller 20 stops the idling during a coasting state of the vehicle. In contrast, if the coasting-state idling stop condition determiner 21 determines the collapse of the establishment of the coasting-state idling stop condition, the coasting-state idling stop controller 20 does not stop the idling during a coasting state of the vehicle.

The coasting-state idling stop condition determiner 21 includes a permission condition determiner 21a and a start condition determiner 21b. The permission condition determiner 21a determines the establishment of the condition for permitting an idling stop during a coasting state of the vehicle (hereinafter referred to as "coasting-state idling stop permission condition"). The start condition determiner 21b determines the establishment of the condition for starting an idling stop during a coasting state of the vehicle (hereinafter referred to as "coasting-state idling stop start condition"). The coasting-state idling stop condition determiner 21 determines the establishment of the coasting-state idling stop condition upon the establishment of the coasting-state idling stop permission condition and the coasting-state idling stop start condition. The coasting-state idling stop permission condition is a precondition of the coasting-state idling stop condition. The permission condition determiner 21a determines the establishment of the coasting-state idling stop permission condition, and the start condition determiner 21b determines the establishment of the coasting-state idling stop start condition. In other words, the coasting-state idling stop condition determiner 21 determines the establishment of the coasting-state idling stop condition if the permission condition determiner 21a determines the establishment of the coasting-state idling stop permission condition and the start condition determiner 21b determines the establishment of the coasting-state idling stop start condition.

The "coasting-state idling stop permission condition" indicates that "the speed V detected by the speed sensor 4 exceeds a second speed V₂ set in advance as a speed for permitting an idling stop during a coasting state of the vehicle" and that "the idling has not been stopped during a coasting state of the vehicle (the idling stop is reset)".

The second speed V₂ is higher than the first speed V₁ and lower than the lower speed limit during cruising of the vehicle and is the upper limit set in advance on the basis of experiments or experiences for driving at varying low speeds, i.e., 25 km/h, during a traffic jam, for example.

The history of idling stops in a coasting state of the vehicle is recorded if the idling is stopped during the latest vehicle coasting and is reset upon the establishment of at least one of the following conditions:
(A1) Stop of the vehicle; and
(A2) A speed V detected by the speed sensor 4 exceeding a fourth speed V₄.

Under condition (A1), the history of idling stops is reset upon the stop of the vehicle after the idling stops during a coasting state. Under condition (A2), the history of idling stops is reset if the speed V of the vehicle exceeds the fourth speed V₄ without a vehicle stop after the idling stopping in a coasting state of the vehicle.

The fourth speed V₄ is higher than the second speed V₂ and is the upper limit set in advance on the basis of experiments or experiences for driving at varying small to medium speeds, i.e., 40 km/h, during a traffic jam, for example.

The "coasting-state idling stop permission condition" will now be described in the following two cases where the history of idling stops in a coasting state of the vehicle is reset under conditions (A1) and (A2).

In a case where the history of idling stops in a coasting state of the vehicle is reset under condition (A1), the "coasting-state idling stop permission condition" indicates that "the speed V detected by the speed sensor 4 exceeds the second speed V₂". That is, the permission condition determiner 21a determines the speed V detected by the speed sensor 4 exceeding the second speed V₂ to determine the establishment of the coasting-state idling stop permission condition. Specifically, if the vehicle stops after the idling is stopped during a coasting state of the vehicle, the coasting-state idling stop permission condition is established at a speed V higher than the second speed V₂. In other words, after the reset of the history of idling stops in a coasting state of the vehicle under condition (A1), the coasting-state idling stop permission condition is established if the vehicle has run at a speed V higher than the second speed V₂ and is not established if the vehicle has only run at a speed V equal to or less than the second speed V₂.

The "coasting-state idling stop permission condition" is established if the history of idling stops in a coasting state of the vehicle is reset under condition (A2). If the vehicle continues to run without stopping after the engine 2 is automatically restarted during a coasting state of the vehicle, the permission condition determiner 21a determines that the speed V detected by the speed sensor 4 exceeds the fourth speed V₄ to determine the establishment of the coasting-state idling stop permission condition. Specifically, the establishment of the coasting-state idling stop permission condition is determined if the speed V exceeds the fourth speed V₄ and the history of idling stops in a coasting state of the vehicle is reset.

If the speed V exceeds the fourth speed V₄, which is higher than the second speed V₂, the coasting-state idling stop permission condition is established because inevitably the following two conditions are established: "the speed V detected by the speed sensor 4 exceeds a second speed V₂ set in advance as a speed for permitting an idling stop during a coasting state of the vehicle"; and "no idling stop has been experienced during a coasting state of the vehicle (the history being reset) " under condition (A2). In other words, if the vehicle continues to run without stopping after the automatic restart of the engine 2 during a coasting state of the vehicle, the coasting-state idling stop permission condition is established at a speed V exceeding the fourth speed V₄ and is not established at a speed V equal to or less than the fourth speed V₄.

That is, once the engine 2 is automatically restarted by the idling start controller 30 upon the establishment of the restart condition, which is described below, during a coasting state of the vehicle, "the coasting-state idling stop permission condition" is established only if: (i) the vehicle is stationary or (ii) the speed V detected by the speed sensor 4 exceeds the fourth speed V₄.

If the engine 2 is automatically restarted by the idling start controller 30 upon the establishment of the restart condition during a coasting state of the vehicle, the idling stop by the coasting-state idling stop controller 20 is prohibited until the vehicle stops or the speed V detected by the speed sensor 4 exceeds the fourth speed V₄, which is higher than the second speed V₂.

In other words, if the engine 2 is automatically restarted by the idling start controller 30 upon the establishment of the restart condition during a coasting state of the vehicle, the coasting-state idling stop controller 20 of the ECU 1 is prohibited from stopping the idling until the vehicle stops or the speed V detected by the speed sensor 4 exceeds the fourth speed V₄, which is higher than the second speed V₂. Thus, the coasting-state idling stop controller 20 does not stop (is prohibited from stopping) the idling until the vehicle stops or the speed V detected by the speed sensor 4 exceeds the fourth speed V₄, which is higher than the second speed V₂.

The "coasting-state idling stop start condition" indicates "the establishment of preconditions not interfering with the idling stop; the detection of the driver's intention to stop the vehicle; and the speed V, detected by the speed sensor 4, falling below the third speed V₃". The speed condition under the "stationary-state idling stop start condition" defines "a speed V indicating the stop of the vehicle", whereas speed condition under the "the coasting-state idling stop start condition" defines "a speed V lower than the third speed V₃". The speed condition is defined differently in "coasting-state idling stop start condition" and "stationary-state idling stop start condition".

The "coasting-state idling stop start condition" differs from the "stationary-state idling stop start condition" in the speed condition and also in the threshold of the steering torque, for example. Other factors are the same.

If the brake switch 3 detects the braking operation by the driver while the preconditions are being established, the start condition determiner 21b determines that the speed V detected by the speed sensor 4 falls below the third speed V₃ to determine the establishment of the coasting-state idling stop start condition. Specifically, if the speed V falls below the third speed V₃, then the coasting-state idling stop start condition is established, otherwise the coasting-state idling stop start condition is not established.

The third speed V₃ according to this embodiment is lower than the second speed V₂ and is the upper limit set in advance on the basis of experiments or experiences that can be presumed as indicating the driver's intention to stop the vehicle, i.e., 12 km/h, for example.

The operation of the ECU 1 depends on the establishment of the conditions for the idling stop: the stationary-state idling stop condition and the coasting-state idling stop condition. Specifically, the first speed V₁, the second speed V₂, the third speed V₃, and the fourth speed V₄ are provided as independent values. The first speed V₁ is provided to determine the idling stop during a stationary-state of the vehicle, and the second speed V₂, the third speed V₃, and the fourth speed V₄ are provided to determine the idling stop during a coasting state of the vehicle.

The idling stop conditions described above may also include other conditions, such as "no steering operation by the driver" or "battery charge sufficient to start the engine 2 with a cell motor (not shown)". In such a case, the idling stop condition determiners 11 and 21 determine these conditions on the basis of the information items detected by the detectors 5 to determine the establishment of the idling stop conditions.

### [1-1-2-3. Configuration on Idling Start Control]

The idling start controller 30 includes a restart condition determiner 31 that determines the establishment of the restart condition, as a functional component. The "restart condition" indicates "the detection of the driver's intention to start the vehicle and/or the collapse of the establishment of any of the preconditions of the idling stop start conditions". "The detection of the driver's intention to start the vehicle" indicates "the detection of the release of the service brake by the driver". In this embodiment, if the idling stop start condition is established, the restart condition is not established. In contrast, if the restart condition is established, the idling stop start condition is not established.

Upon the determination of the establishment of the restart condition by the restart condition determiner 31 during an automatic stop of the engine, i.e., idling stop, the idling start controller 30 starts the idling. In contrast, upon the determination of the collapse of the establishment of the restart condition by the restart condition determiner 31 during the idling stop, the idling start controller 30 does not start the idling.

The restart condition determiner 31 determines the braking operation of the vehicle by the driver on the basis of a detection signal from the brake switch 3 and determines the establishment of the preconditions to determine the establishment of the restart condition.

The restart condition indicating the detection of the driver' s intention to start the vehicle may include, for example, the operation of the accelerator or the steering wheel by the driver, besides the condition described above. In such a case, the restart condition determiner 31 determines the establishment of the restart condition on the basis of the information items detected by the detectors 5.

### [1-2. Flow Charts]

The control process carried out by the ECU 1 will now be described with reference to the flow charts in Figs. 2A, 2B, and 3. The procedures shown in the flow charts are repeated through control cycles. The steps in the flow chart are carried out by functions assigned to the hardware of the ECU 1 operated by software (computer programs).

### [1-2-1. Flow Charts of Determination Process of Idling stop Permission Condition]

The determination process of the permission of the idling stop will now be described with reference to Figs. 2A and 2B.

The determination process of the stationary-state idling stop permission condition will be described with reference to Fig. 2A. Figs. 2A and 3 indicate that if the flag Fs is "1", then the stationary-state idling stop permission condition is established; or if the flag Fs is "0", the condition is not established.

Step A10 determines whether the flag F_{S} is "0". Specifically, Step A10 determines the establishment of the stationary-state idling stop permission condition. If the stationary-state idling stop permission condition is not established, then the process goes to Step A20, otherwise the control process ends.

Step A20 determines whether the speed V exceeds the first speed V₁. Specifically, Step A20 determines a speed V higher than the first speed V₁. If the speed V exceeds the first speed V₁, then the process goes to Step A30, otherwise the process ends.

Step A30 sets the flag Fs to "1". The process then ends.

The determination process of the coasting-state idling stop permission condition will now be described with reference to Fig. 2B. Figs. 2B and 3 indicate that if the flag F_{C} is "1", then the coasting-state idling stop permission condition is established; or if the F_{C} is "0", the condition is not established. A flag F_{EXP} of "1" indicates the idling stop during the latest vehicle coasting, whereas a flag F_{EXP} of "0" indicates no idling stop during the latest vehicle coasting.

Step B10 determines whether the flag F_{C} is "0". Specifically, Step B10 determines the establishment of the coasting-state idling stop permission condition. If the coasting-state idling stop permission condition is established, then the process goes to Step B20, otherwise the process ends.

Step B20 determines whether the flag F_{EXP} is "0". Specifically, Step B20 determines whether the idling is stopped during the latest vehicle coasting. If the idling is not stopped during the latest vehicle coasting, then the process goes to Step B30, otherwise the process goes to Step B50.

Step B30 determines whether the speed V exceeds the second speed V₂. Specifically, Step B30 determines whether a speed V is higher than the second speed V₂. If the speed V exceeds the second speed V₂, then the process goes to Step B40, otherwise the process ends.

Step B40 sets the flag Fc to "1". The process then ends.

Step B50 determines the stop of the vehicle (V=0). If the vehicle is in a stationary-state, then the process goes to Step B60, otherwise the process goes to Step B70.

Step B60 sets the flag F_{EXP} to "0". The process then ends.

Step B70 determines whether the speed V exceeds the fourth speed V₄. Specifically, Step B70 determines whether a speed V is higher than the fourth speed V₄. If the speed V exceeds the fourth speed V₄, then the process goes to Step B80, otherwise the process ends.

Step B80 sets the flag F_{EXP} to "0" and the flag Fc to "1". The process then ends.

### [1-2-2. Determination Process of Idling stop Start Condition]

The determination of the idling stop start conditions for coasting and stationary states of the vehicle will now be described with reference to Fig. 3.

Step C10 determines the establishment of the idling stop start conditions other than the speed condition. Specifically, Step C10 determines the establishment of idling stop start conditions for the stationary and coasting states other than the speed condition. Step C10 determines whether both of the idling stop start conditions are established. Step C10 also determines the establishment of the restart condition. If the establishment of the idling stop start conditions other than the speed condition is determined, then the process goes to Step C20, otherwise the process goes to Step C100.

Step C20 determines whether the flag F_{C} is "1". Specifically, Step C20 determines the establishment of the coasting-state idling stop permission condition. If the coasting-state idling stop permission condition is established (if the flag F_{C} is "1"), then the process goes to Step C30, otherwise (if the flag F_{C} is "0"), the process goes to Step C70.

Step C30 determines whether the speed V is lower than the third speed V₃. Specifically, Step C30 determines the speed condition under the coasting-state idling stop start condition. If the speed condition is established (if the speed V is lower than the third speed V₃), then the process goes to Step C40, otherwise the process ends.

Step C40 determines the stop of the vehicle (V≅0). Step C40 determines the speed condition under the stationary-state idling stop start condition. If the speed condition is established (V≅0), then the process goes to Step C80, otherwise the process goes to Step C50.

Step C50 stops the idling during a coasting state of the vehicle. The process then goes to Step C60.

Step C60 sets the flag F_{EXP} to "1". The process then ends.

Similar to Step C40, Step C70 determines the stop of the vehicle (V≅0). If the vehicle is in a stationary-state, then the process goes to Step C80, otherwise the process ends.

Step C80 determines whether the flag F_{S} is "1". Specifically, Step C80 determines the establishment of the stationary-state idling stop permission condition. If the stationary-state idling stop permission condition is established (if the flag F_{S} is "1"), then the process goes to Step C90, otherwise (if the flag Fs is "0"), the process ends.

If the stop of the vehicle (YES in Step C70) is determined while the collapse of the establishment of the coasting-state idling stop permission condition (NO in Step C20) is determined, then the process ends upon the collapse of the establishment of the stationary-state idling stop permission condition in Step C80 (NO in Step C80).

After Step C40 goes to Step C80, the coasting-state idling stop permission condition is established. Thus, the stationary-state idling stop permission condition is inevitably established. Consequently, Step C40 goes to Step C80 and then to Step C90.

Step C90 stops the idling during a stationary-state of the vehicle. The process then ends.

Step C100 determines the engine stop caused by the idling stop. If the engine is stopped, then the process goes to Step C110, otherwise the process ends.

Step C110 determines the stop of the vehicle (V=0). If the vehicle is in a stationary-state, then the process goes to Step C120, otherwise the process goes to Step C130.

Step C120 sets both flags F_{S} and F_{C} to "0". The process then goes to Step C140.

Step C130 sets only the flag F_{C} to "0". The process then goes to Step C140.

Step C140 starts the idling. The process then ends.

### [1-3. Advantageous Effect]

The engine control unit according to this embodiment has a configuration described above and thus achieves the following advantages.

The stationary-state idling stop controller 10 stops the idling to automatically stop the engine 2 of the vehicle during a stationary-state upon the establishment of the stationary-state idling stop condition including a vehicle stop after a speed V exceeding the first speed V₁ is detected by the speed sensor 4. Thus, the idling is not stopped during a stationary-state of the vehicle at a speed lower than the first speed V₁ during a traffic jam or parking operation, for example, involving repeated stop and run operations. Inevitably, the idling does not start to automatically restart the engine 2. Thus, frequent idling stops during a stationary-state of the vehicle are prevented to maintain the drivability.

The coasting-state idling stop controller 20 stops the idling during a coasting state of the vehicle upon the establishment of the coasting-state idling stop condition including the detection of a speed V exceeding the second speed V₂ and then falling below the third speed V₃, which is lower than the second speed V₂, by the speed sensor 4. If a speed V exceeding the second speed V₂ and then falling below the third speed V₃ is detected by the speed sensor 4, the coasting-state idling stop condition is established. Thus, the coasting-state idling stop controller 20 stops the idling during a coasting state of the vehicle to improve the fuel efficiency. The engine 2 does not automatically stop during a running state under variable speeds that do not exceed the second speed V₂ but repeatedly fall below the third speed V₃ during a traffic jam, for example. Inevitably, the engine 2 is not restarted. Thus, frequent idling stops during a coasting state of the vehicle are prevented to maintain the drivability.

The second speed V₂ of the coasting-state idling stop condition is higher than the first speed V₁. Thus, upon the vehicle stop after a speed V exceeding the first speed V₁ but not exceeding the second speed V₂ while repeatedly falling below the third speed V₃ is detected by the speed sensor 4, the coasting-state idling stop condition is not established but the stationary-state idling stop condition is established. Consequently, the coasting-state idling stop controller 20 does not stop the idling during a coasting state of the vehicle, whereas the stationary-state idling stop controller 10 stops the idling during a stationary-state of the vehicle. Thus, frequent idling stops during a coasting state of the vehicle are prevented to maintain the drivability, and the frequency of the idling stops during a stationary-state of the vehicle is increased to improve the fuel efficiency.

The "combined technique" described in the Background section of the present invention defines only one engine-stop permission speed for the determination of the permission of an idling stop. An engine-stop permission speed higher than the engine-stop start speed (corresponding to the "third speed V₃") prevents frequent idling stops at a speed lower than the engine-stop start speed not exceeding the engine-stop permission speed. The engine-stop permission speed cannot be set lower than the engine-stop start speed. A high engine-stop permission speed prohibits the idling stop in both coasting and stationary states of the vehicle because the speed of the vehicle is less likely to exceed the engine-stop permission speed. This precludes an improvement in the fuel efficiency.

The engine control unit according to this embodiment defines four speeds for the determination of the idling stop: a first speed V₁ for the idling stop during a stationary-state of the vehicle; and a second speed V₂, a third speed V₃, and a fourth speed V₄ for the idling stop during a coasting state of the vehicle. The first speed V₁ is a value independent from the speeds V₂ to V₄.

For example, the idling is stopped during a coasting state of the vehicle on the basis of the second speed V₂, the third speed V₃, and the fourth speed V₄ upon the determination of the establishment of the coasting-state idling stop condition by the coasting-state idling stop condition determiner 21 if the permission condition determiner 21a determines the establishment of the coasting-state idling stop permission condition and if the start condition determiner 21b determines the establishment of the coasting-state idling stop start condition. In this way, the idling can be stopped appropriately during a coasting state of the vehicle.

In this embodiment, the third speed V₃ is higher than the first speed V₁. Thus, upon the vehicle stop after a speed V exceeding the first speed V₁ but not exceeding the second speed V₂ while repeatedly falling below the third speed V₃ is detected by the speed sensor 4, the idling is not stopped during a coasting state of the vehicle because the coasting-state idling stop condition is not established but the idling is stopped during a stationary-state of the vehicle because the stationary-state idling stop condition is established. Thus, frequent idling stops during a coasting state of the vehicle are prevented to maintain the drivability, and the frequency of the idling stops during a stationary-state of the vehicle is maintained to improve the fuel efficiency.

After the idling is started during a coasting state of the vehicle, the ECU 1 (coasting-state idling stop controller 20) prohibits the coasting-state idling stop controller 20 from stopping the idling during a coasting state of the vehicle until the vehicle stops or the speed V exceeds the fourth speed V₄. Thus, the idling during a coasting state of the vehicle is not stopped while the vehicle is running after the idling is started during the coasting state of the vehicle, even if the speed V repeatedly falls below the third speed V₃ without exceeding the fourth speed V₄. Thus, frequent idling stops during a coasting state of the vehicle are prevented to maintain the drivability.

An exemplary idling stop operation carried out by the engine control unit according to this embodiment will now be described with reference to Figs. 4A to 4F.

As illustrated in Fig. 4A, the speed V exceeds the first speed V₁ at time t₁. As illustrated in Fig. 4B, the establishment of the stationary-state idling stop permission condition causes the flag F_{S} (indicating the collapse of the establishment of the condition) to be reset from "0" to "1" (indicating the establishment of the condition).

As illustrated in Fig. 4A, the speed V exceeds the second speed V₂ at time t₂. As illustrated in Fig. 4C, the establishment of the coasting-state idling stop permission condition causes the flag F_{C} (indicating the collapse of the establishment of the condition) to be reset from "0" to "1" (indicating the establishment of the condition).

As illustrated in Fig. 4D, the driver starts the braking operation at time t₃ and continues the operation until time t₅. As illustrated in Fig. 4A, the speed V decreases at time t₃ and falls below the third speed V₃, which is lower than the second speed V₂ at time t₄. That is, the coasting-state idling stop start condition is established at time t₄, and the restart condition is established at time t₅. Thus, as illustrated in Fig. 4D, the flag F_{EXP} for the history of idling stop during a coasting state of the vehicle is set to "1" at time t₄, and as illustrated in Fig. 4F, the idling is stopped from time t₄ to time t₅.

The cancelation of the idling stop at time t₅ resets (i.e., set to "0") the flag F_{C} for the idling stop during a coasting state of the vehicle, as illustrated in Fig. 4C. The flag F_{S} for the idling stop during a stationary-state of the vehicle remains at "1", as illustrated in Fig. 4B.

From time t₅ to time t₆, the speed V repeatedly falls below the third speed V₃ due to the braking operation at times t₅₁, t₅₂, t₅₃, t₅₄, t₅₅, and t₅₆, as illustrated in Figs. 4A and 4E. During this term, the flag F_{EXP} remains at "1", as illustrated in Fig. 4D. Thus, as illustrated in Fig. 4C, the flag F_{S} for the establishment of the coasting-state idling stop permission condition is set to "0" (indicating the collapse of the establishment of the condition). Consequently, the idling is not stopped, as illustrated in Fig. 4F. As illustrated in Fig. 4D, the flag F_{EXP} is set to "0" after time t₆.

In a case where the coasting-state idling stop permission condition is established if the speed V falls below the second speed V₂ after exceeding the third speed V₃ regardless of the history of idling stops, the idling frequently stops at times t₅₁, t₅₂, t₅₃, t₅₄, t₅₅, and t₅₆, as indicated by the dotted lines in Fig. 4F.

In contrast, with the engine control unit according to this embodiment in the vehicle continuing to run after the idling starts during a coasting state of the vehicle, the idling does not stop during a coasting state of the vehicle even if the speed V repeatedly falls below the third speed V₃ without exceeding the fourth speed V₄ (not shown), which is higher than the second speed V₂. That is, while the vehicle continues to run after the start of the idling during a coasting state of the vehicle, the ECU 1 prohibits the coasting-state idling stop controller 20 from stopping the idling during a coasting state of the vehicle until the speed V exceeds the fourth speed V₄. Thus, once the idling stops during a coasting state of the vehicle, frequent idling stops during the coasting state of the vehicle can be prevented.

After time t₆, the speed V indicates the stop of the vehicle (V=0), as illustrated in Fig. 4A, and the braking operation continues, as illustrated in Fig. 4E. After time t₆, the flag F_{S} is set to "1", as illustrated in Fig. 4B. Specifically, the idling stops, as illustrated in Fig. 4F, due to the establishment of the stationary-state idling stop permission condition. Thus, the frequency of the idling stops during a stationary-state of the vehicle is maintained to improve the fuel efficiency.

Although not shown in the drawings, even if the speed V repeatedly falls below the third speed V₃ without exceeding the second speed V₂ after time t₆, the idling does not stop during a coasting state of the vehicle. Thus, once the idling stops during a coasting state of the vehicle, frequent idling stops during a coasting state of the vehicle are prevented.

### [2. Others]

The present invention should not be limited to the embodiments described above The configurations according to the embodiments described above and modifications thereof may be selected and/or be combined appropriately. In an embodiment described above, the third speed V₃ is higher than the first speed V₁. Alternatively, the first speed V₁ and the third speed V₃ may have any other relationship. That is, the first speed V₁ can be set in accordance with the level of prevention of frequent idling stops during a stationary-state of the vehicle. The third speed V₃ can be set independently from the first speed V₁ in accordance with the frequency of the idling stops during a coasting state of the vehicle. Thus, the first speed V₁ can be higher than the third speed V₃ or the first speed V₁ and the third speed V₃ can be the same.

In an embodiment described above, the cancelation of an idling stop during a coasting or stationary state of the vehicle resets the determination of the establishment of the coasting-state idling stop permission condition. Alternatively, the determination of the establishment of the coasting-state idling stop permission condition may be reset in response to the cancelation of an idling stop during a coasting state of the vehicle but not during a stationary-state of the vehicle. Alternatively, the determination of the establishment of the coasting-state idling stop permission condition may be reset in response to the completion of an idling stop during a stationary-state of the vehicle but not during a coasting state of the vehicle. In such cases, the frequency of idling stops during a coasting state of the vehicle increases, but the control logic is simplified.

The history of idling stops under the "coasting-state idling stop permission condition" is not limited to that reset under condition (A2). Alternatively, the history of idling stops may be reset upon the detection of a speed V exceeding the second speed V₂ by the speed sensor 4. In such a case, the engine control unit according to the present invention may define at least the first speed V₁ for the idling stops during a stationary-state of the vehicle, the second speed V₂ and the third speed V₃ for the determination of the idling stops during a coasting state of the vehicle. Thus, the control logic can be simplified.

### REFERENCE SIGNS LIST

- 1: ECU
- 2: engine
- 3: brake switch
- 4: speed sensor
- 5: other sensors
- 10: stationary-state idling stop controller
- 11: stationary-state idling stop condition determiner
- 11a: permission condition determiner
- 11b: start condition determiner
- 20: coasting-state idling stop controller
- 21: coasting-state idling stop condition determiner
- 21a: permission condition determiner
- 21b: start condition determiner
- 30: idling start controller
- 31: restart condition determiner

## Claims

1. An engine control unit (1) comprising:
a stationary-state idling stop controller (10) that automatically stops an engine (2) mounted in a vehicle during a stationary-state of the vehicle; and
an input connected to a speed sensor (4), that detects a speed (V) of the vehicle;
wherein the stationary-state idling stop controller (10) automatically stops the engine (2) after the engine (2) is started and upon the establishment of a stationary-state idling stop condition corresponding to the stop of the vehicle, whereas the stationary-state idling stop controller (10) is not permitted until the speed (V) of the vehicle exceeds a first speed (V₁) after the idling start; and
a coasting-state idling stop controller (20) that automatically stops the engine (2) during a coasting state of the vehicle, wherein the coasting-state idling stop controller (20) automatically stops the engine (2) after the engine (2) is started and during the coasting state of the vehicle, when the speed (V) of the vehicle is falling below a third speed (V₃) ;
the engine control unit (1) being **characterized in that**
the coasting-state idling stop controller (20) is permitted when the speed (V) of the vehicle is exceeding a second speed (V₂) higher than the first speed (V₂) and higher than the third speed (V₃), when the engine (2) has been not stopped during the latest vehicle coasting or when the vehicle has been stopped since the latest vehicle coasting; **in that**
the coasting-state idling stop controller (20) is permitted when the speed (V) of the vehicle is exceeding fourth speed (V₄) higher than the second speed (V₂), when the engine (2) has been stopped during the latest vehicle coasting and when the vehicle has not been stopped since the latest vehicle coasting; and **in that**
the coasting-state idling stop controller (20) is not permitted otherwise.

## Patentansprüche

1. Motorsteuerungseinheit (1), aufweisend:
eine Stand-Leerlaufabschaltsteuerung (10), die einen in ein Fahrzeug eingebauten Motor (2) in einem stationären Zustand des Fahrzeugs automatisch abschaltet; und
einen Eingang, der mit einem Geschwindigkeitssensor (4) verbunden ist, der eine Geschwindigkeit (V) des Fahrzeugs erfasst;
wobei die Stand-Leerlaufabschaltsteuerung (10) den Motor (2) nach dem Starten des Motors (2) und nach der Herstellung einer Stand-Leerlaufabschaltbedingung, die dem Anhalten des Fahrzeugs entspricht, automatisch abschaltet, wohingegen die Stand-Leerlaufabschaltsteuerung (10) erst zugelassen wird, wenn die Geschwindigkeit (V) des Fahrzeugs eine erste Geschwindigkeit (V₁) nach dem Leerlaufbeginn überschreitet; und
eine Freilaufabschaltsteuerung (20), die den Motor (2) während eines Freilaufzustands des Fahrzeugs automatisch abschaltet, wobei die Freilaufabschaltsteuerung (20) den Motor (2) nach dem Starten des Motors (2) und während des Freilaufzustands des Fahrzeugs automatisch abschaltet, wenn die Geschwindigkeit (V) des Fahrzeugs unter eine dritte Geschwindigkeit (V₃) absinkt;
wobei die Motorsteuerungseinheit (1) **dadurch gekennzeichnet ist, dass**
die Freilaufabschaltsteuerung (20) zugelassen wird, wenn die Geschwindigkeit (V) des Fahrzeugs eine zweite Geschwindigkeit (V₂) überschreitet, die höher als die erste Geschwindigkeit (V₁) und höher als die dritte Geschwindigkeit (V₃) ist, wenn der Motor (2) während des letzten Fahrzeugfreilaufs nicht abgeschaltet wurde oder wenn das Fahrzeug seit dem letzten Fahrzeugfreilauf angehalten wurde; dadurch, dass
die Freilaufabschaltsteuerung (20) zugelassen wird, wenn die Geschwindigkeit (V) des Fahrzeugs eine vierte Geschwindigkeit (V₄) übersteigt, die höher als die zweite Geschwindigkeit (V₂) ist, wenn der Motor (2) während des letzten Fahrzeugfreilaufs abgeschaltet wurde und wenn das Fahrzeug seit dem letzten Fahrzeugfreilauf nicht angehalten wurde; und dadurch, dass
die Freilaufabschaltsteuerung (20) andernfalls nicht zugelassen wird.

## Revendications

1. Unité de commande de moteur (1) comprenant:
un dispositif de commande d'arrêt du ralenti à l'état stationnaire (10) qui arrête automatiquement un moteur (2) monté dans un véhicule pendant un état stationnaire du véhicule; et
une entrée connectée à un capteur de vitesse (4), qui détecte une vitesse (V) du véhicule;
dans lequel le dispositif de commande d'arrêt du ralenti à l'état stationnaire (10) arrête automatiquement le moteur (2) après le démarrage du moteur (2) et lors de l'établissement d'une condition d'arrêt du ralenti à l'état stationnaire correspondant à l'arrêt du véhicule, tandis que le dispositif de commande d'arrêt du ralenti à l'état stationnaire (10) n'est pas autorisé jusqu'à ce que la vitesse (V) du véhicule dépasse une première vitesse (V₁) après le démarrage du ralenti; et
un dispositif de commande d'arrêt du ralenti en état de roue libre (20) qui arrête automatiquement le moteur (2) pendant un état de roue libre du véhicule, dans lequel le dispositif de commande d'arrêt du ralenti en état de roue libre (20) arrête automatiquement le moteur (2) après le démarrage du moteur (2) et pendant l'état de roue libre du véhicule, lorsque la vitesse (V) du véhicule descend en dessous d'une troisième vitesse (V₃);
l'unité de commande de moteur (1) étant **caractérisée en ce que** le dispositif de commande d'arrêt du ralenti en état de roue libre (20) est autorisé lorsque la vitesse (V) du véhicule dépasse une deuxième vitesse (V₂) supérieure à la première vitesse (V₁) et supérieure à la troisième vitesse (V₃), lorsque le moteur (2) n'a pas été arrêté pendant la dernière mise en roue libre du véhicule ou lorsque le véhicule a été arrêté depuis la dernière mise en roue libre du véhicule; **en ce que**
le dispositif de commande d'arrêt du ralenti en état de roue libre (20) est autorisé lorsque la vitesse (V) du véhicule dépasse une quatrième vitesse (V₄) supérieure à la deuxième vitesse (V₂), lorsque le moteur (2) a été arrêté pendant la dernière mise en roue libre du véhicule et lorsque le véhicule n'a pas été arrêté depuis la dernière mise en roue libre du véhicule; et **en ce que**
le dispositif de commande d'arrêt du ralenti en état de roue libre (20) n'est pas autorisé autrement.
